# EUROPEAN PATENT APPLICATION

(11) **EP 4 750 078 A1**
(43) Date of publication of application: **27.05.2026**
(21) Application number: 24861822.5
(22) Date of filing: 20.08.2024
(51) Int. Cl.: H04Q 11/00

(54) **CONFIGURATION METHOD AND AUTHENTICATION METHOD FOR OPTICAL COMMUNICATION DEVICE, AND APPARATUS, OPTICAL COMMUNICATION DEVICE, AND SYSTEM**

(30) Priority: 08.09.2023 CN 202311164116
(71) Applicant: Huawei Technologies Co., Ltd., Shenzhen, Guangdong 518129 (CN)
(72) Inventor: YU, Naishen, Shenzhen, Guangdong 518129 (CN); GUO, Zengjiang, Shenzhen, Guangdong 518129 (CN)
(74) Representative: Körber, Martin Hans
(86) International application number: PCT/CN2024/113476
(87) International publication number: WO 2025/050978

(57) **Abstract**

A configuration and authentication method and apparatus for an optical communication device, an optical communication device, and a system are disclosed, and belong to the field of optical communication technologies. The configuration method includes: A first optical communication device determines a random delay parameter, where the random delay parameter is less than 48 µs; and sends a broadcast message to a plurality of second optical communication devices, where the broadcast message carries configuration information, and the configuration information is used to configure the random delay parameter. The first optical communication device can flexibly configure the random delay parameter of the second optical communication devices by using the broadcast message.

## Description

This application claims priority to Chinese Patent Application No. 202311164116.4, filed on September 8, 2023 and entitled "CONFIGURATION AND AUTHENTICATION METHOD AND APPARATUS FOR OPTICAL COMMUNICATION DEVICE, OPTICAL COMMUNICATION DEVICE, AND SYSTEM", which is incorporated herein by reference in its entirety.

### TECHNICAL FIELD

This application relates to the field of optical communication technologies, and in particular, to a configuration and authentication method and apparatus for an optical communication device, an optical communication device, and a system.

### BACKGROUND

A passive optical network (passive optical network, PON) is a point-to-multipoint single-fiber bidirectional optical access network. A PON system generally includes a first optical communication device, an optical distribution network (optical distributed network, ODN), and a plurality of second optical communication devices. The first optical communication device is connected to the plurality of second optical communication devices through the ODN.

When the second optical communication device goes online, the first optical communication device needs to perform authentication on the second optical communication device, and only an authenticated second optical communication device can perform data transmission with the first optical communication device. Generally, an authentication process of the second optical communication device includes: The first optical communication device sends, in a quiet window, a serial number request message to the second optical communication device. The second optical communication device sends a serial number response message to the first optical communication device based on a random delay parameter in response to the received serial number request message. The first optical communication device performs authentication on the second optical communication device based on the serial number response message.

A length of the quiet window is greater than a sum of the random delay parameter and a round-trip propagation delay. The random delay parameter is 48 µs by default. In a case in which a maximum differential distance between the first optical communication device and the second optical communication devices is 20 km, the round-trip propagation delay is 200 µs. In a case in which a maximum differential distance between the first optical communication device and the second optical communication devices is 40 km, the round-trip propagation delay is 400 µs. Therefore, the length of the quiet window is long. In the quiet window, an authenticated second optical communication device cannot send data. Therefore, the long length of the quiet window causes a high data transmission delay of the second optical communication device.

### SUMMARY

This application provides a configuration method and apparatus for an optical communication device, an optical communication device, and a system, to help reduce a data transmission delay of a second optical communication device.

According to a first aspect, this application provides a configuration method for an optical communication device. The configuration method includes: A first optical communication device determines a random delay parameter, where the random delay parameter is less than 48 µs; and the first optical communication device sends a broadcast message to a plurality of second optical communication devices, where the broadcast message carries configuration information, and the configuration information is used to configure the random delay parameter.

In this application, the first optical communication device can flexibly configure the random delay parameter of the second optical communication devices by sending the broadcast message that carries the configuration information used to configure the random delay parameter. In addition, the random delay parameter configured by using the configuration information is less than 48 µs, in other words, the random delay parameter configured by using the configuration information is less than a default random delay parameter in a related technology. In this way, when a round-trip propagation delay is fixed, a length of a quiet window can be reduced. This helps reduce a data transmission delay of an authenticated second optical communication device.

Optionally, the first optical communication device may determine the random delay parameter in any one of the following manners.

Manner 1: Receive the input random delay parameter.

In Manner 1, the random delay parameter may be directly configured by a staff member. The implementation is simple, and few changes are made to execution logic of the first optical communication device.

Manner 2: Determine the random delay parameter based on a maximum differential distance between the first optical communication device and the plurality of second optical communication devices, where the random delay parameter is in direct proportion to the maximum differential distance. Optionally, the maximum differential distance may be received by the first optical communication device, for example, a parameter that is configured by a staff member and that is received through a configuration interface.

In Manner 2, a smaller maximum differential distance indicates that the length of the quiet window needs to be set to be shorter. Therefore, the default random delay parameter may be converted based on the maximum differential distance. A calculation manner is simple, and implementation is convenient.

Manner 3: Determine the random delay parameter based on a remaining bandwidth, where the remaining bandwidth is a bandwidth that is not allocated to the second optical communication device in one bandwidth allocation periodicity, and the random delay parameter is less than a difference obtained by subtracting the round-trip propagation delay and a change of response time of the second optical communication device from a length of the remaining bandwidth.

In Manner 3, the remaining bandwidth may be used for windowing, to avoid impact on data transmission of the authenticated second optical communication device. In addition, when the random delay parameter is determined based on the remaining bandwidth, each authenticated second optical communication device can normally perform data transmission in each bandwidth allocation periodicity. Therefore, a windowing frequency can be increased. For example, one window may be set every 1 ms or 2 ms. In this way, a second optical communication device that newly goes online can be found in time, and authentication on the second optical communication device that newly goes online can be quickly completed.

According to a second aspect, this application provides a configuration method for an optical communication device. The configuration method includes: A second optical communication device receives a broadcast message sent by a first optical communication device, where the broadcast message carries configuration information, the configuration information is used to configure a random delay parameter, and the random delay parameter is less than 48 µs. The second optical communication device stores the configuration information.

In this application, the first optical communication device can flexibly configure the random delay parameter of the second optical communication devices by sending the broadcast message that carries the configuration information used to configure the random delay parameter. In addition, the random delay parameter configured by using the configuration information is less than 48 µs, in other words, the random delay parameter configured by using the configuration information is less than a default random delay parameter in a related technology. In this way, when a round-trip propagation delay is fixed, a length of a quiet window can be reduced. This helps reduce a data transmission delay of an authenticated second optical communication device.

According to a third aspect, this application provides an authentication method for an optical communication device. The authentication method includes: A first optical communication device sends a broadcast message to a plurality of second optical communication devices, where the broadcast message carries configuration information, the configuration information is used to configure a random delay parameter, and the random delay parameter is less than 48 µs. The first optical communication device sends a serial number request message to the plurality of second optical communication devices. The first optical communication device receives a serial number response message sent by the second optical communication device, where the serial number response message is sent by the second optical communication device based on the random delay parameter configured by using the configuration information.

Optionally, that the first optical communication device sends the serial number request message to the plurality of second optical communication devices includes: sending, in a quiet window, the serial number request message to the plurality of second optical communication devices, where a length of the quiet window is less than 125 µs. A shorter length of the quiet window indicates less impact on data transmission of an authenticated second optical communication device.

Optionally, the length of the quiet window is determined based on a maximum differential distance between the first optical communication device and the plurality of second optical communication devices, and the maximum differential distance is less than 12.5 km. Therefore, the method provided in this application is particularly applicable to a scenario in which a distance between the first optical communication device and the second optical communication device is short.

According to a fourth aspect, this application provides an authentication method for an optical communication device. The authentication method includes: A second optical communication device receives a broadcast message sent by a first optical communication device, where the broadcast message carries configuration information, the configuration information is used to configure a random delay parameter, and the random delay parameter is less than 48 µs. The second optical communication device receives a serial number request message sent by the first optical communication device. The second optical communication device sends a serial number response message to the first optical communication device based on the random delay parameter in response to the serial number request message.

According to a fifth aspect, this application provides an authentication method for an optical communication device. The method includes:
A first optical communication device sends a serial number request message to a plurality of second optical communication devices.

The first optical communication device receives a serial number response message sent by the second optical communication device, where the serial number response message carries a random delay parameter and a serial number of the second optical communication device.

The first optical communication device performs authentication on the second optical communication device based on the serial number and the random delay parameter.

After the authentication succeeds, the first optical communication device sends a key generate message to the second optical communication device, where the key generate message carries a key parameter, and the key parameter is used to generate a new key.

In this application, the first optical communication device may perform authentication on the second optical communication device based on the serial number and the random delay parameter that are sent by the second optical communication device. In addition, the first optical communication device sends the key generate message to the second optical communication device, so that the second optical communication device generates the new key based on the key parameter in the message, and encrypts data transmission between the first optical communication device and the second optical communication device based on the new key. This improves communication security between the first optical communication device and the second optical communication device.

In a possible solution, the new key is a key pair including a sending key and a receiving key.

In a possible solution, the key generate message carries (includes) an identifier of the second optical communication device and the key parameter. After receiving the key generate message that carries the identifier, the second optical communication device generates the new key based on the key parameter for use or for replacing an old key.

In a possible solution, the key generate message carries a key index, and the index may point to the new key.

In a possible solution, the key parameter includes one or more random numbers generated by the first optical communication device. In this application, the random number is used as the key parameter, so that security of the generated key can be enhanced.

In a possible solution, the key generate message carries an integrity check bit, and the check bit is used by the second optical communication device to perform integrity check on the key generate message, to enhance security of the key generate message. The first optical communication device may generate the integrity check bit by using a default integrity key in a broadcast scenario, and the first optical communication device may alternatively generate the integrity check bit by using an integrity key shared between the first optical communication device and the second optical communication device in a unicast scenario.

In a possible solution, the key generate message carries a key length that indicates a length (for example, 256 bytes) of the new key.

In a possible solution the first optical communication device starts a first key waiting timer when sending the key generate message to the second optical communication device.

The first optical communication device sends a new key generate message to the second optical communication device when the first key waiting timer expires and no new key report message sent by the second optical communication device is received.

In a possible solution, after the authentication on the second optical communication device succeeds, the first optical communication device is in a key inactive state, in other words, currently, there is no valid key between the first optical communication device and the second optical communication device for service data transmission.

In a possible solution, the first optical communication device enters a key request state when determining that a key exchange procedure needs to be started. In the key request state, the first optical communication device sends the key generate message to the second optical communication device.

In a possible solution, the authentication method provided in this application further includes:
The first optical communication device receives a new key report message sent by the second optical communication device, where the new key report message carries the new key generated by the second optical communication device. In this way, the first optical communication device can also obtain the new key generated by the second optical communication device. The first optical communication device may decrypt, based on the new key, data sent by the second optical communication device, and the first optical communication device may further send the encrypted data to the second optical communication device based on the new key, to enhance communication security.

In a possible solution, after receiving the new key report message, the first optical communication device enters a key confirm state from the current key request state.

In a possible solution, the new key report message includes an identifier of the second optical communication device, to identify a source of the new key report message.

In a possible solution, the new key report message includes a report type (new key report or existing key report). In this embodiment, the report type included in the new key report message is new key report, in other words, the second optical communication device reports the generated new key.

In a possible solution, the new key report message includes the new key encrypted by using a shared key. The first optical communication device decrypts the new key report message by using the shared key, to obtain the new key carried in the new key report message, thereby enhancing security of transmission of the new key and avoiding leakage of the new key.

In a possible solution, the new key report message includes an index (a key index) of the new key. After obtaining the new key, the first optical communication device stores a correspondence between the new key and the key index, to subsequently obtain, based on the key index, the new key generated by the second optical communication device.

In a possible solution, the new key report message carries an integrity check bit, and the check bit is used by the first optical communication device to perform integrity check on the new key report message, to enhance security of the new key report message. The first optical communication device may generate the integrity check bit by using an integrity key shared between the first optical communication device and the second optical communication device.

In a possible solution, the foregoing authentication method further includes:
The first optical communication device sends a key confirm message to the second optical communication device, where the key confirm message carries an index of the new key. The message is used to confirm that the first optical communication device has received the new key sent by the second optical communication device.

In a possible solution, the key confirm message further carries parameters such as an identifier of the second optical communication device, a key length, and an integrity check bit. Functions of the related parameters are the same as those in the key generate message.

In a possible solution, after sending the key confirm message to the second optical communication device, the first optical communication device enters a key confirm waiting state from a key confirm state.

In a possible solution, the foregoing authentication method further includes:
The first optical communication device receives an existing key report message sent by the second optical communication device, and the first optical communication device enters a key active state. The existing key report message carries the foregoing key index. After receiving the existing key report message, the first optical communication device confirms that the second optical communication device has activated the new key corresponding to the key index, enters the key active state from the key confirm waiting state, and activates the new key to communicate with the second optical communication device (for example, send service data).

In a possible solution, the first optical communication device starts a second key waiting timer when sending the key confirm message to the second optical communication device.

The first optical communication device sends a new key confirm message to the second optical communication device when the second key waiting timer expires and no existing key report message sent by the second optical communication device is received, to avoid waiting for the existing key report message sent by the second optical communication device for a long time. This improves reliability of the authentication method.

In a possible solution, that the first optical communication device sends the serial number request message to the plurality of second optical communication devices includes:
sending, in a quiet window, the serial number request message to the plurality of second optical communication devices, where a length of the quiet window is less than or equal to 250 µs. The serial number request message is sent in the quiet window, so that impact on receiving of service data by the second optical communication device can be avoided, and communication reliability can be improved.

In a possible solution, before the first optical communication device sends the serial number request message to the plurality of second optical communication devices, the method further includes:
The first optical communication device sends a broadcast message to the plurality of second optical communication devices, where the broadcast message carries configuration profile information. The second optical communication device may construct an upstream data frame based on the configuration information and send the upstream data frame to the first optical communication device.

According to a sixth aspect, this application provides an authentication method for an optical communication device. The method includes:
A second optical communication device receives a serial number request message sent by a first optical communication device.

The second optical communication device generates a random delay parameter in response to the serial number request message.

The second optical communication device sends a serial number response message to the first optical communication device based on the random delay parameter, where the serial number response message carries the random delay parameter and a serial number of the second optical communication device.

The second optical communication device receives a key generate message sent by the first optical communication device, where the key generate message carries a key parameter, and the key parameter is used to generate a new key.

The second optical communication device generates the new key based on the key parameter in the key generate message.

In the authentication method provided in this application, the second optical communication device may send the serial number response message to the first optical communication device based on the random delay parameter. Random delays of different second optical communication devices are different. Therefore, in this application, a conflict caused when serial number response messages sent by a plurality of second optical communication devices simultaneously arrive at the first optical communication device can be avoided, thereby improving communication stability. In addition, the second optical communication device may further generate the new key based on the key generate message sent by the first optical communication device, so that the second optical communication device may send encrypted data to the second optical communication device based on the new key. This improves security of communication between the second optical communication device and the first optical communication device.

In a possible solution, that the second optical communication device sends the serial number response message to the first optical communication device based on the random delay parameter includes:
The second optical communication device generates the serial number response message, and sends the serial number response message to the first optical communication device after a delay corresponding to the random delay parameter is satisfied.

In a possible solution, after receiving the key generate message, the second optical communication device enters a key generating state from a key inactive state.

In a possible solution, that the second optical communication device generates the new key based on the key parameter in the key generate message includes:
The second optical communication device generates an intermediate key based on the key parameter sent by the first optical communication device and a shared key, and then generates the new key based on the shared key, the intermediate key, and the key parameter generated by the second optical communication device. In this solution, the intermediate key is added, so that security of the generated new key (a sending key and a receiving key) can be improved.

In a possible solution, the key parameter includes a random number.

In a possible solution, the key generate message received by the second optical communication device further includes a key index. After generating the new key, the second optical communication device may further locally store a correspondence between the generated new key and the key index.

In a possible solution, the foregoing authentication method further includes:
The second optical communication device sends a new key report message to the first optical communication device, where the new key report message carries the new key generated by the second optical communication device.

In a possible solution, the second optical communication device encrypts the generated new key by using a shared key, and the new key report message sent by the second optical communication device includes the encrypted new key.

In a possible solution, after generating the new key, the second optical communication device enters a key confirm waiting state from a key generating state. In the key confirm waiting state, the second optical communication device may send the new key report message to the first optical communication device.

In a possible solution, the second optical communication device starts a third key waiting timer when sending the new key report message to the first optical communication device.

The second optical communication device resends the new key report message to the first optical communication device when the third key waiting timer expires and no key confirm message sent by the first optical communication device is received. In this solution, the key waiting timer is set, to prevent the second optical communication device from waiting for the key confirm message for a long time. This improves reliability of the authentication method.

For parameters carried (included) in the new key report message sent by the second optical communication device and beneficial effects, refer to the descriptions in the fifth aspect. Details are not described herein again.

In a possible solution, the foregoing authentication method further includes: The second optical communication device receives a key confirm message sent by the first optical communication device, and enters a key confirm state.

The key confirm message received by the second optical communication device carries a key index, and the second optical communication device confirms, based on the index, that the first optical communication device has obtained the new key.

After receiving the key confirm message, the second optical communication device may change a status of the new key to active (activate the new key).

In a possible solution, the foregoing authentication method further includes: The second optical communication device sends an existing key report message to the first optical communication device, and the second optical communication device enters a key active state.

In a possible solution, the existing key report message carries (includes) an identifier of the second optical communication device, to identify a source of the new key report message.

In a possible solution, the existing key report message includes a report type (new key report or existing key report). In this embodiment, the report type included in the existing key report message is existing key report, in other words, the second optical communication device reports a currently existing key (different from a previously reported new key).

In a possible solution, the existing key report message includes a key index. The first optical communication device may obtain, based on the key index, the new key generated by the second optical communication device.

In a possible solution, the existing key report message carries an integrity check bit, and the check bit is used by the first optical communication device to perform integrity check on the existing key report message, to enhance security of the existing key report message. The first optical communication device may generate the integrity check bit by using an integrity key shared between the first optical communication device and the second optical communication device.

In a possible solution, the second optical communication device generates a key name based on a shared key and the new key, where the existing key report message includes the key name generated by the second optical communication device. For example, the second optical communication device calculates a hash value (key name Key_Name) based on the shared key and the new key.

Correspondingly, after receiving the existing key report message, the first optical communication device may check the previously stored new key based on the key name, to further enhance communication security. For example, the first optical communication device calculates a key name based on the stored new key, and determines whether the key name obtained through calculation is consistent with the key name carried in the existing key report message. If the key names are consistent, it indicates that the previously stored new key is correct, and subsequent communication with the second optical communication device may be encrypted by using the new key.

Optionally, in the first aspect to the sixth aspect, the broadcast message is a physical layer operations, administration and maintenance (physical layer operations, administration and maintenance, PLOAM) message, and the PLOAM message includes a field used to carry the configuration information; or the broadcast message is a GPON transmission convergence (GPON transmission convergence, GTC) frame or an Ethernet packet.

When the broadcast message is the PLOAM message, the PLOAM message may be an extended burst length (extended burst length) message, an upstream overhead configuration (upstream_overhead) message, or an extended optical network unit (optical network unit, ONU) configuration message. An existing PLOAM message or a newly added PLOAM message is used to carry the configuration information, so that few changes are made to a protocol, and implementation is easy.

When the broadcast message is the GTC frame, the GTC frame may be a downstream synchronization frame. Optionally, the configuration information may be carried in a header or a payload part of the GTC frame.

Optionally, the key generate message is a key control (generate) Key_Control(Generate) PLOAM message, and the new key report message is a key report (new key) Key_Report(Newkey) PLOAM message. The key confirm message is a key control (confirm) Key_Control(Confirm) PLOAM message, and the existing key report message is a key report (existing key) Key_Report(Existingkey) PLOAM message.

In the first aspect to the sixth aspect, the first optical communication device and the second optical communication device are both devices in an optical access network. For example, the first optical communication device is an optical line termination (optical line termination, OLT) in a PON system, and the second optical communication device is an ONU in the PON system. For another example, the first optical communication device is a main fiber to the room (fiber to the room, FTTR), and the second optical communication device is a sub FTTR. The main FTTR is a main ONU in an FTTR scenario, and is also referred to as a main gateway. The sub FTTR is a sub ONU in the FTTR scenario, and is also referred to as a sub gateway.

According to a seventh aspect, this application provides a configuration apparatus for an optical communication device. The configuration apparatus for an optical communication device has a function of implementing the method according to any one of the first aspect or the optional implementations of the first aspect. The function may be implemented by hardware, or may be implemented by hardware executing corresponding software. The hardware or the software includes one or more units corresponding to the function.

According to an eighth aspect, this application provides a configuration apparatus for an optical communication device. The configuration apparatus for an optical communication device has a function of implementing the method according to any one of the second aspect or the optional implementations of the second aspect. The function may be implemented by hardware, or may be implemented by hardware executing corresponding software. The hardware or the software includes one or more units corresponding to the function.

According to a ninth aspect, an embodiment of this application provides an authentication apparatus for an optical communication device. The authentication apparatus for an optical communication device has a function of implementing the method according to any one of the third aspect or the optional implementations of the third aspect. The function may be implemented by hardware, or may be implemented by hardware executing corresponding software. The hardware or the software includes one or more units corresponding to the function.

According to a tenth aspect, an embodiment of this application provides an authentication apparatus for an optical communication device. The authentication apparatus for an optical communication device has a function of implementing the method according to any one of the fourth aspect or the optional implementations of the fourth aspect. The function may be implemented by hardware, or may be implemented by hardware executing corresponding software. The hardware or the software includes one or more units corresponding to the function.

According to an eleventh aspect, an optical communication device is provided. The optical communication device includes a processor and a memory. The memory is configured to store a software program and a module. The processor runs or executes the software program and/or the module stored in the memory to implement the method in any one of the first aspect or the possible implementations of the first aspect, the method in any one of the second aspect or the possible implementations of the second aspect, the method in any one of the third aspect or the possible implementations of the third aspect, the method in any one of the fourth aspect or the possible implementations of the fourth aspect, the method in any one of the fifth aspect or the possible implementations of the fifth aspect, or the method in any one of the sixth aspect or the possible implementations of the sixth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a twelfth aspect, a computer program product is provided. The computer program product includes computer program code, and when the computer program code is run by a computer, the computer is caused to perform the method in any one of the first aspect or the possible implementations of the first aspect, the method in any one of the second aspect or the possible implementations of the second aspect, the method in any one of the third aspect or the possible implementations of the third aspect, the method in any one of the fourth aspect or the possible implementations of the fourth aspect, the method in any one of the fifth aspect or the possible implementations of the fifth aspect, or the method in any one of the sixth aspect or the possible implementations of the sixth aspect.

According to a thirteenth aspect, this application provides a computer-readable storage medium, where the computer-readable storage medium is configured to store program code executed by a processor, and the program code includes instructions used to implement the method in any one of the possible implementations of the first aspect, the method in any one of the second aspect or the possible implementations of the second aspect, the method in any one of the third aspect or the possible implementations of the third aspect, the method in any one of the fourth aspect or the possible implementations of the fourth aspect, the method in any one of the fifth aspect or the possible implementations of the fifth aspect, or the method in any one of the sixth aspect or the possible implementations of the sixth aspect.

According to a fourteenth aspect, this application provides a chip, including a processor, where the processor is configured to invoke, from a memory, instructions stored in the memory and run the instructions, to cause an optical communication device in which the chip is installed to perform the method in any one of the possible implementations of the first aspect, the method in any one of the second aspect or the possible implementations of the second aspect, the method in any one of the third aspect or the possible implementations of the third aspect, the method in any one of the fourth aspect or the possible implementations of the fourth aspect, the method in any one of the fifth aspect or the possible implementations of the fifth aspect, or the method in any one of the sixth aspect or the possible implementations of the sixth aspect.

According to a fifteenth aspect, this application provides another chip. The another chip includes an input interface, an output interface, a processor, and a memory. The input interface, the output interface, the processor, and the memory are connected through an internal connection path. The processor is configured to execute code in the memory, and when the code is executed, the processor is configured to perform the method in any one of the possible implementations of the first aspect, the method in any one of the second aspect or the possible implementations of the second aspect, the method in any one of the third aspect or the possible implementations of the third aspect, the method in any one of the fourth aspect or the possible implementations of the fourth aspect, the method in any one of the fifth aspect or the possible implementations of the fifth aspect, or the method in any one of the sixth aspect or the possible implementations of the sixth aspect.

### BRIEF DESCRIPTION OF DRAWINGS

FIG. 1 is a diagram of a structure of a PON system according to an embodiment of this application;
FIG. 2 is a diagram of a configuration method for an optical communication device according to an embodiment of this application;
FIG. 3 is a diagram of another configuration method for an optical communication device according to an embodiment of this application;
FIG. 4 is a diagram of a data transmission process in a PON system according to an embodiment of this application;
FIG. 5 is a diagram of an authentication method for an optical communication device according to an embodiment of this application;
FIG. 6 is a block diagram of a configuration apparatus for an optical communication device according to an embodiment of this application;
FIG. 7 is a block diagram of another configuration apparatus for an optical communication device according to an embodiment of this application;
FIG. 8 is a block diagram of an authentication apparatus for an optical communication device according to an embodiment of this application;
FIG. 9 is a block diagram of another authentication apparatus for an optical communication device according to an embodiment of this application; and
FIG. 10 is a diagram of a structure of an optical communication device according to an embodiment of this application.

### DESCRIPTION OF EMBODIMENTS

To make objectives, technical solutions, and advantages of this application clearer, the following further describes implementations of this application in detail with reference to accompanying drawings.

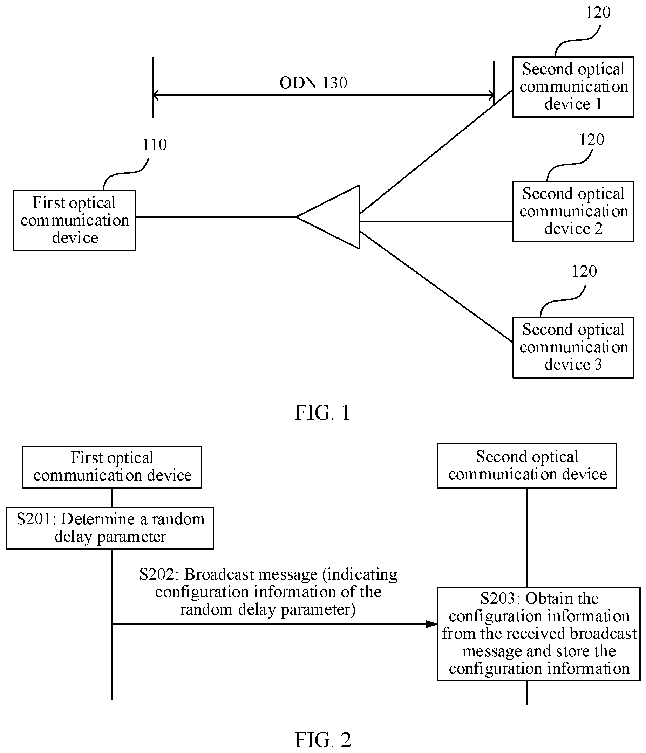

FIG. 1 is a diagram of a PON system according to an embodiment of this application. As shown in FIG. 1, the PON system includes a first optical communication device 110, second optical communication devices 120, and an ODN 130. The first optical communication device 110 is connected to one or more second optical communication devices 120 through the ODN 130. Both the first optical communication device 110 and the second optical communication device 120 are devices in an optical access network.

For example, the first optical communication device is an OLT, and the second optical communication device is an ONU. For another example, the first optical communication device is a main FTTR, and the second optical communication device is a sub FTTR. The main FTTR is a main ONU in an FTTR scenario, and is also referred to as a main gateway. The sub FTTR is a sub ONU in the FTTR scenario, and is also referred to as a sub gateway. The main FTTR is generally installed in a living room or an information box at a door. In addition to providing network functions of a common ONU, the main FTTR also implements management functions such as configuration synchronization and channel optimization for other ONUs at home.

In embodiments of this application, the ONU may also be referred to as an optical network termination (optical network termination, ONT).

The first optical communication device 110 is generally located on a network side, for example, a central office (central office, CO), and may manage the plurality of second optical communication devices 120 together. The first optical communication device 110 may serve as a medium between the second optical communication device 120 and an upper-layer network (not shown in the figure), to forward data received from the upper-layer network to the second optical communication device 120, and forward data received from the second optical communication device 120 to the upper-layer network. The upper-layer network includes but is not limited to the internet, a public switched telephone network (public switched telephone network, PSTN), a community antenna television (community antenna television, CATV), and the like.

The plurality of second optical communication devices 120 may be disposed on a user side in a distributed manner. The second optical communication device 120 may be a network device configured to communicate with the first optical communication device 110 and user equipment. The second optical communication device 120 may serve as a medium between the first optical communication device 110 and the user equipment. For example, the second optical communication device 120 may forward data received from the first optical communication device 110 to the user equipment, and forward data received from the user equipment to the first optical communication device 110.

The ODN 130 is a data distribution/multiplexing system, and may include a feeder fiber, a passive optical splitter, and a user fiber. The passive optical splitter may include one first port and a plurality of second ports. The first port of the passive optical splitter is connected to the first optical communication device 110 through the feeder fiber, and each second port of the passive optical splitter is connected to one second optical communication device 120 through the user fiber.

In the PON system, downstream is from the first optical communication device 110 to the second optical communication device 120. The first optical communication device 110 broadcasts downstream data to all the second optical communication devices 120, and each second optical communication device 120 receives only data carrying an identifier of the second optical communication device. Conversely, upstream is from the second optical communication device 120 to the first optical communication device 110. The first optical communication device 110 allocates a slot to each second optical communication device 120, and each second optical communication device 120 sends upstream data based on the slot allocated by the first optical communication device 110. The slot allocation performed by the first optical communication device 110 for each second optical communication device 120 may be referred to as bandwidth allocation or bandwidth authorization.

In this embodiment of this application, the first optical communication device 110 is configured to deliver a broadcast message to the second optical communication device 120, to configure a random delay parameter for the second optical communication device 120. After receiving the broadcast message, the second optical communication device 120 determines the random delay parameter based on the received broadcast message, and sends a serial number response message based on the random delay parameter. For details, refer to the following method embodiments.

In embodiments of this application, the PON system includes but is not limited to a gigabit-capable PON (gigabit-capable PON, GPON), a 10 gigabit per second PON (10 gigabit per second PON, XG-PON), a 10-gigabit-capable symmetric passive optical network (10-gigabit-capable symmetric passive optical network, XGS-PON), an Ethernet PON (Ethernet PON, EPON), a 10 gigabit per second EPON (10 gigabit per second EPON, 10G-EPON), a 25 gigabit per second PON (25 gigabit per second PON, 25G-PON), a 50 gigabit per second PON (50 gigabit per second PON, 50G-PON), a 100 gigabit per second PON (100 gigabit per second PON, 100G-PON), a 25 gigabit per second EPON (25 gigabit per second EPON, 25G-EPON), a 50 gigabit per second EPON (50 gigabit per second EPON, 50G-EPON), GPONs and EPONs of other rates, and the like.

FIG. 2 is a schematic flowchart of a configuration method for an optical communication device according to an embodiment of this application. As shown in FIG. 2, the method includes the following steps.

S201: A first optical communication device determines a random delay parameter.

The random delay parameter is less than 48 µs. In a related technology, the random delay parameter is 48 µs by default.

S202: The first optical communication device sends a broadcast message to a plurality of second optical communication devices, where the broadcast message carries configuration information, and the configuration information is used to configure the random delay parameter.

Correspondingly, the second optical communication device receives the broadcast message sent by the first optical communication device.

S203: The second optical communication device obtains the configuration information from the received broadcast message and stores the configuration information.

In this way, the second optical communication device can send a response message, for example, a serial number response message, based on the random delay parameter corresponding to the configuration information.

In this embodiment of this application, the first optical communication device may send the broadcast message that carries the configuration information used to configure the random delay parameter. Therefore, the random delay parameter of the second optical communication device can be flexibly configured as required. In addition, the random delay parameter configured by using the configuration information is less than 48 µs, and when a round-trip propagation delay remains unchanged, a length of a quiet window can be reduced. This helps reduce a data transmission delay of an authenticated second optical communication device. When the round-trip propagation delay is reduced, the length of the quiet window can be further reduced. This also helps reduce the data transmission delay of the authenticated second optical communication device.

In some embodiments, the method is performed in a scenario in which a maximum differential distance between the first optical communication device and the plurality of second optical communication devices is less than 20 km. When the maximum differential distance between the first optical communication device and the plurality of second optical communication devices is short, the length of the quiet window generally needs to be reduced, to improve transmission performance of the second optical communication devices. Therefore, the random delay parameter may be configured by using the method in FIG. 2. In a campus network scenario or an FTTR scenario, communication distances between the second optical communication devices and the first optical communication device are all short, and correspondingly, the maximum differential distance is also short. For example, in the campus network scenario, a largest communication distance between the first optical communication device and the plurality of second optical communication devices is generally less than 10 km. In the FTTR scenario, a largest communication distance between the first optical communication device and the plurality of second optical communication devices is less than 5 km, and is generally less than 1 km.

In embodiments of this application, the communication distance between the second optical communication device and the first optical communication device may be a length of an optical fiber connected between the second optical communication device and the first optical communication device. The differential distance is also referred to as a differential fiber distance, and may be a difference between communication distances between any two second optical communication devices and the first optical communication device. The maximum differential distance is a difference between a largest communication distance and a smallest communication distance in the communication distances between the first optical communication device and the second optical communication devices.

In a possible implementation, the configuration information is an index value corresponding to the random delay parameter. Random delay parameters with different values correspond to different index values.

In some examples, several random delay parameter point values may be arranged at intervals in a range of 0 µs to 48 µs, and each random delay parameter point value corresponds to one index value. Intervals between adjacent random delay parameter point values may be equal or unequal. In this manner, the random delay parameter may be indicated by a small quantity of bits.

For example, 10 µs, 20 µs, 30 µs, and 40 µs may be selected as random delay parameter point values, and respectively correspond to index values 00, 01, 10, and 11. In this way, only two bits are needed to indicate the random delay parameter.

In some other examples, more random delay parameter point values may be arranged in the range of 0 µs to 48 µs. This is not limited in this application. A quantity of random delay parameter point values is related to a quantity of bits (namely, bits indicating the random delay parameter) used to carry the configuration information. For example, if the quantity of bits used to carry the configuration information is n, the quantity of random delay parameter point values is less than or equal to 2 to the power of n.

In another possible implementation, the configuration information is directly a value of the random delay parameter. In this case, there are more possibilities for the configured random delay parameter, and the random delay parameter may even reach an order of magnitude of 0.1 µs, for example, 2.1 µs or 3.8 µs.

The following uses an example in which the first optical communication device is an OLT and the second optical communication device is an ONU for description. A person skilled in the art may understand that the following OLT may alternatively be a main FTTR, and the following ONU may alternatively be a sub FTTR.

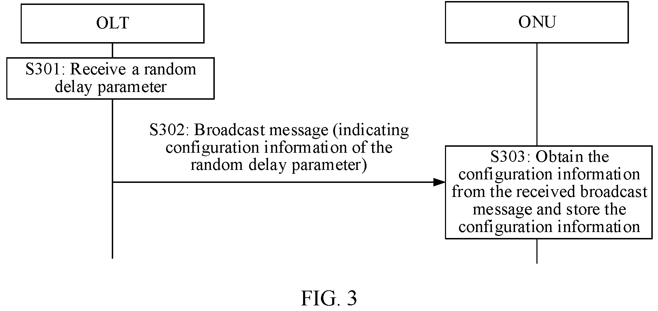

FIG. 3 is a schematic flowchart of a configuration method for an optical communication device according to an embodiment of this application. As shown in FIG. 3, the method includes the following steps.

S301: An OLT receives a random delay parameter.

For example, the OLT receives the random delay parameter input through a configuration interface. The random delay parameter is set by a staff member based on a networking status of a PON system, for example, determined based on a maximum differential distance between the OLT and a plurality of ONUs. The random delay parameter is directly configured by the staff member. The implementation is simple, and few changes are made to execution logic of the OLT.

Alternatively, in another embodiment, the OLT may determine the random delay parameter in the following two manners.

In a first manner, the random delay parameter is determined based on the maximum differential distance between the OLT and the plurality of ONUs. The random delay parameter is proportional to the maximum differential distance. In some examples, the maximum differential distance may be received by the OLT through the configuration interface. The staff member enters the maximum differential distance to the OLT based on the networking status of the PON system.

In some examples, the OLT determines a product of a default random delay parameter (namely, 48 µs) and a first proportion value as the random delay parameter. For example, the first proportion value may be equal to a ratio of the maximum differential distance to 20 km. Assuming that the maximum differential distance is 2 km, the first proportion value is equal to 0.1, and the random delay parameter is 4.8 µs.

In the first manner, a smaller maximum differential distance indicates that a length of a quiet window needs to be set to be shorter. Therefore, the default random delay parameter may be converted based on the maximum differential distance. A calculation manner is simple, and implementation is convenient.

In a second manner, the random delay parameter is determined based on a remaining bandwidth, where the remaining bandwidth is a bandwidth that is not allocated to the ONU in one bandwidth allocation periodicity. The random delay parameter is less than a difference obtained by subtracting a round-trip propagation delay and a change of response time of the ONU from a length of the remaining bandwidth.

For example, one bandwidth allocation periodicity is 125 µs.

Assuming that an allocated bandwidth is 85 µs, the remaining bandwidth is 40 µs. If the maximum differential distance is 1 km, the round-trip propagation delay corresponding to the maximum differential distance is 10 µs, and the response change of the ONU is 2 µs, the random delay parameter is less than or equal to 28 µs.

For example, a manner in which the OLT determines the remaining bandwidth may include: first determining an allocated bandwidth in each bandwidth allocation periodicity based on a bandwidth of each authenticated ONU connected to the OLT; and then determining a difference between the bandwidth allocation periodicity and the allocated bandwidth as the remaining bandwidth. The allocated bandwidth is equal to a sum of bandwidths of all authenticated ONUs. The bandwidth of each authenticated ONU may be obtained based on subscription information of the authenticated ONU. A length of a slot that needs to be allocated to the ONU in each bandwidth allocation periodicity may be determined based on the subscription information.

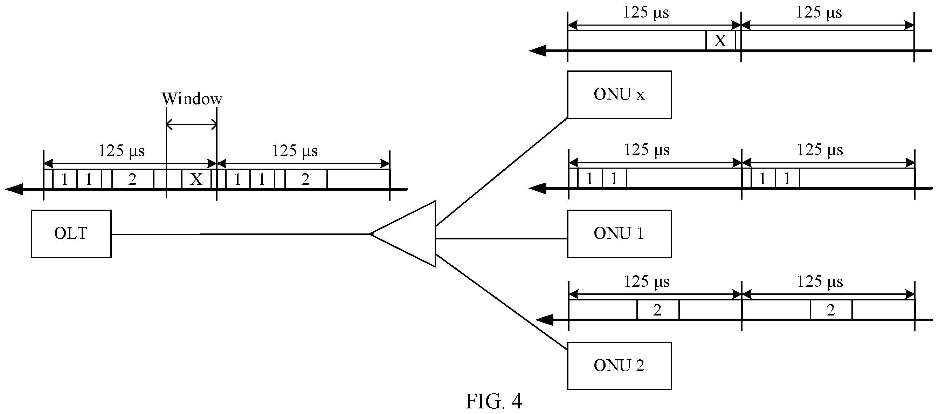

FIG. 4 is a diagram of a data transmission process in a PON system according to an embodiment of this application. As shown in FIG. 4, an ONU 1 and an ONU 2 are authenticated ONUs. In each bandwidth allocation periodicity (namely, 125 µs), upstream bandwidths are allocated to both the ONU 1 and the ONU 2, the ONU 1 sends data 1 at the allocated upstream bandwidth, and the ONU 2 sends data 2 at the allocated upstream bandwidth. An ONU x is a newly powered-on ONU, and the ONU x sends a serial number response message X in a quiet window. It can be learned from FIG. 4 that a length of the quiet window is less than 125 µs, the quiet window is within a remaining bandwidth, and data transmission of the ONU 1 and the ONU 2 is not affected.

It can be learned that, in the second manner, the remaining bandwidth may be used for windowing, to avoid impact on data transmission of the authenticated ONU. In addition, when the random delay parameter is determined based on the remaining bandwidth, each authenticated ONU can normally perform data transmission in each bandwidth allocation periodicity. Therefore, a windowing frequency can be increased. For example, one window may be set every 1 ms or 2 ms. In this way, an ONU that newly goes online can be found in time, and authentication on the ONU that newly goes online can be quickly completed.

S302: The OLT sends a broadcast message to the plurality of ONUs.

In some examples, the broadcast message may be a PLOAM message.

In a possible implementation, a field used to carry configuration information may be newly added to an existing PLOAM message.

Optionally, the existing PLOAM message may be an extended burst length (extended burst length) message or an upstream overhead configuration (upstream_overhead) message.

The following separately describes formats of the two PLOAM messages.

**Table 1 Format of the extended burst length message**

| Octet | Content | Description |
|---|---|---|
| 1 | 11111111 | Broadcast message to all ONUs |
| 2 | 00010100 | Message identification "extended burst length" |
| 3 | pppppppp | Number of Type 3 preamble bytes used when the ONU is in pre-ranged states (O3 and O4) |
| 4 | rrrrrrrr | Number of Type 3 preamble bytes used when the ONU is in ranged states (O5 and O6) |
| 5 | XXXXXXXX | Random delay parameter |
| 6-12 | 00000000 | Reserved |

As shown in Table 1, the extended burst length message includes 12 bytes, and a 5^{th} byte is used to carry the random delay parameter. 6^{th} to 12^{th} bytes are reserved bytes. In other words, the 5^{th} byte is a field used to carry the configuration information. In another embodiment, another reserved byte may alternatively be used to carry the random delay parameter.

When the extended burst length message is used to carry the configuration information, a quantity of bits used to carry the configuration information is large. Therefore, the configuration information may be the foregoing index value corresponding to the random delay parameter, or the configuration information is directly a value of the random delay parameter.

**Table 2 Format of the upstream_overhead message**

| Octet | Content | Description |
|---|---|---|
| 1 | 11111111 | Broadcast message to all ONUs |
| 2 | 00000001 | Message identification "upstream_overhead" |
| 3 | gggggggg | Number of guard bits |
| 4 | XXXXXXXX | Number of Type 1 preamble bits |
| 5 | yyyyyyyy | Number of Type 2 preamble bits |
| 6 | cccccccc | Pattern to be used for Type 3 preamble bits |
| 7 | bbbbbbbb | Data to be programmed in delimiter byte 1 |
| 8 | bbbbbbbb | Data to be programmed in delimiter byte 2 |
| 9 | bbbbbbbb | Data to be programmed in delimiter byte 3 |
| 10 | xxemsspp | xx = Reserved; e = Status of delay pre-equalization mechanism; m = Status of SN_Mask mechanism; ss = Max number of extra SN-transmissions sent in response to a single Sn-request; pp = Default ONU transmit power level mode; pp = "11" - Reserved. |
| 11 | dddddddd | Most significant bit (most significant bit, MSB) of pre-assigned delay |
| 12 | dddddddd | Least significant bit (least significant bit, LSB) of pre-assigned delay |

As shown in Table 2, the upstream _overhead message includes 12 bytes, and some bits of a 10^{th} byte are reserved. Therefore, the reserved bits may be used to carry the configuration information. In other words, the 10^{th} byte is a field used to carry the configuration information. A quantity of bits that can be used to carry the configuration information is small in this manner. Therefore, the configuration information may be the foregoing index value corresponding to the random delay parameter.

In another possible implementation, a PLOAM message may be newly added, and the newly added PLOAM message includes a field used to carry the configuration information. For example, the newly added PLOAM message may be referred to as an extended ONU configuration (extended ONU config) message.

**Table 3 Format of the extended ONU config message**

| Octet | Content | Description |
|---|---|---|
| 1 | 11111111 | Broadcast message to all ONUs |
| 2 | yyyyyyyy | Message identification "extended ONU config" |
| 3 | XXXXXXXX | Random delay parameter |
| 4-12 | Unspecified | Reserved |

As shown in Table 3, the newly added PLOAM message includes 12 bytes. A 1^{st} byte indicates that a message type of the message is the broadcast message sent to all the ONUs. A 2^{nd} byte indicates that the message identification of the message is an extended ONU configuration message. A 3^{rd} byte is used to carry the random delay parameter. 4^{th} to 12^{th} bytes are reserved bytes. In other words, the 3^{rd} byte is a field used to carry the configuration information. In another embodiment, another reserved byte may alternatively be used to carry the random delay parameter.

When the newly added PLOAM message is used to carry the configuration information, a quantity of bits used to carry the configuration information is large. Therefore, the configuration information may be the foregoing index value corresponding to the random delay parameter, or the configuration information is directly a value of the random delay parameter.

In some other examples, the broadcast message may be a GTC frame. In this case, the PON system to which the OLT and the ONU belong may be a GPON system of various rates. The GTC frame includes but is not limited to a downstream synchronization frame (DS frame with valid PSync) and the like. Optionally, the configuration information may be carried in a header or a payload (payload) field of the GTC frame.

In some other examples, the broadcast message is an Ethernet packet. In this case, the PON system to which the OLT and the ONU belong is an EPON system of various rates.

Correspondingly, the ONU receives the broadcast message sent by the OLT.

S303: The ONU obtains the configuration information from the received broadcast message and stores the configuration information.

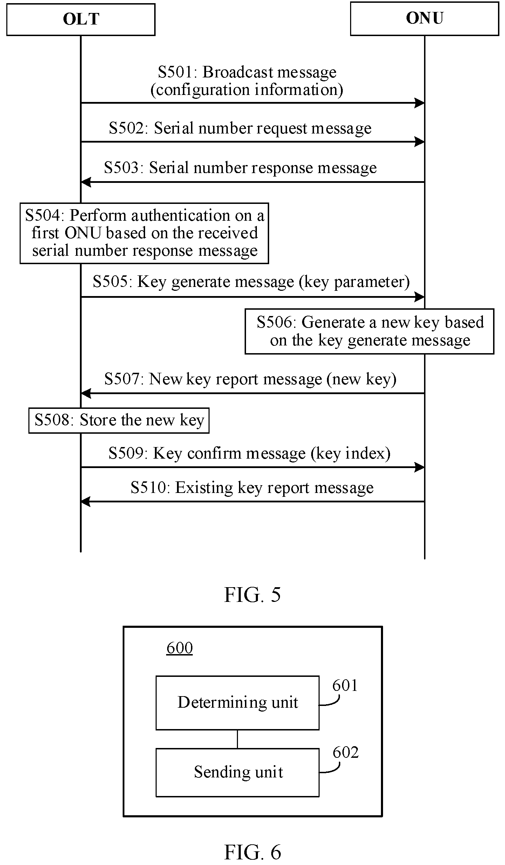

FIG. 5 is a schematic flowchart of an authentication method for an optical communication device according to an embodiment of this application. As shown in FIG. 5, the method includes the following steps.

S501: An OLT sends a broadcast message.

The broadcast message carries configuration information, the configuration information is used to configure a random delay parameter, and the random delay parameter is less than 48 µs. The broadcast message is a PLOAM message. For related content of the PLOAM message, refer to the embodiment shown in FIG. 3, and details are not described herein again. For a manner in which the OLT obtains the random delay parameter, refer to the embodiment shown in FIG. 3, and details are not described herein again.

S502: The OLT sends a serial number request message to a plurality of ONUs.

Correspondingly, a first ONU receives the serial number request message.

Optionally, the OLT sends, in a quiet window, the serial number request message to the plurality of ONUs. In the quiet window, an authenticated ONU cannot send upstream data.

Optionally, a length of the quiet window is less than 125 µs. A shorter length of the quiet window indicates less impact on data transmission of the authenticated ONU. In comparison with a length of a quiet window that is generally 250 µs in a related technology, the length of the quiet window is reduced to less than 125 µs, so that the impact on the data transmission of the authenticated ONU can be significantly reduced.

The length of the quiet window is determined based on a maximum differential distance between the OLT and the plurality of ONUs. When the length of the quiet window is less than 125 µs, the maximum differential distance between the OLT and the ONUs is less than 12.5 km. This is because, as specified in a standard, when the maximum differential distance between the OLT and the ONUs is 20 km, a corresponding round-trip propagation delay is 200 µs. Assuming that 125 µs is the round-trip propagation delay, a corresponding maximum differential distance is 12.5 km. The length of the quiet window is equal to a sum of the round-trip propagation delay, a change (2 µs by default) of response time of the ONU, and the random delay parameter. Therefore, when the length of the quiet window is equal to 125 µs, the maximum differential distance between the OLT and the ONUs is less than 12.5 km.

In some embodiments, the length of the quiet window is less than 48 µs, for example, greater than or equal to 4 µs and less than 48 µs. In this way, the impact on the data transmission of the authenticated ONU can be further reduced.

S503: The first ONU sends a serial number response message to the OLT based on the random delay parameter in response to the serial number request message.

The first ONU is any ONU that receives the serial number request message.

In S503, the first ONU randomly selects a random number from the random delay parameter as a target delay value, and sends the serial number response message after delaying the target delay value. A possibility that different ONUs determine a same target delay value is low. Therefore, a possibility that the OLT simultaneously receives serial number response messages sent by different ONUs is also low, so that a conflict between the serial number response messages sent by the different ONUs can be reduced.

The serial number response message carries a serial number of the first ONU. Correspondingly, the OLT receives the serial number response message.

S504: The OLT performs authentication on the first ONU based on the received serial number response message.

The serial number in the serial number response message is compared with a pre-stored serial number of the first ONU. If the serial number in the serial number response message is different from the pre-stored serial number of the first ONU, the first ONU fails to pass the authentication. If the serial number in the serial number response message is the same as the pre-stored serial number of the first ONU, a subsequent authentication procedure is performed. The subsequent authentication procedure includes a ranging procedure and the like. For a specific process, refer to a related technology.

In this embodiment, if the subsequent authentication procedure of the ONU is successfully performed, the ONU enters an operation state. When the ONU enters the operation state, there is no key that is between the ONU and the OLT and that can be used to encrypt a payload, and both the OLT and the ONU are in a key inactive state. The authentication method provided in this embodiment further includes the following steps.

S505: The OLT sends a key generate message to the ONU, where the key generate message carries a key index and a key parameter.

In this embodiment, the OLT may enter a key request state from the key inactive state. The OLT in the key request state may send the key generate message to the ONU in the key inactive state, where the message carries the key index and the key parameter. In addition, the OLT may further start a key waiting timer 1.

Specifically, a channel termination (channel termination, CT) module in the OLT may send a PLOAM message to the ONU, for example, a key control (generate) Key_Control(Generate) PLOAM message.

In this embodiment, the Key_Control(Generate) PLOAM message sent by the OLT carries an index of a new key and a random number R1 generated by the OLT. When sending the PLOAM message to the ONU, the OLT starts a key waiting timer 2.

S506: The ONU generates the new key based on the key generate message.

In this embodiment, after receiving the key generate message sent by the OLT, the ONU in the key inactive state enters a key generating state. When entering the key generating state, the ONU may start a key waiting timer 4.

In the key generating state, the ONU generates the new key based on the key generate message. For example, the ONU generates the new key (which may include a sending key and a receiving key) based on the random number R1 in the PLOAM message and a random number R2 generated by the ONU.

S507: The ONU sends a new key report message to the OLT, where the new key report message carries the new key generated by the ONU.

In this embodiment, the ONU may send a PLOAM message to the OLT to send the new key. For example, the ONU sends a key report (new key) Key_Report(Newkey) PLOAM message to the OLT. After the ONU sends the Key_Report(Newkey) PLOAM message to the OLT, the ONU enters a key confirm waiting state, and starts a key waiting timer 5.

The new key may be encrypted by using a shared key between the OLT and the ONU, in other words, the Key_Report(Newkey) PLOAM message carries the new key encrypted by using the shared key. After receiving the encrypted new key, the OLT may obtain the new key through decryption based on the shared key.

After receiving the Key_Report(Newkey) PLOAM message, the OLT enters a key confirm state from the current key request state, and performs step S508. If the OLT does not receive the Key_Report(Newkey) PLOAM message when the local key waiting timer 2 of the OLT expires, the OLT re-initiates a key control (generate) Key_Control(Generate) PLOAM message to the ONU.

S508: The OLT stores the new key that is generated by the ONU and that is carried in the new key report message.

After receiving the new key report message, the OLT may decrypt (for example, decrypt by using the shared key) the Key_Report(Newkey) PLOAM message to obtain the new key carried in the message, and then store a correspondence between the decrypted new key and the key index.

S509: The OLT sends a key confirm message to the ONU, where the key confirm message carries the key index.

The OLT may send a PLOAM message, for example, a key control (confirm) Key_Control(Confirm) PLOAM message, to the ONU to confirm that the new key has been received. After sending the Key_Control(Confirm) PLOAM message to the ONU, the OLT may start a key waiting timer 3.

After receiving the Key_Control(Confirm) PLOAM message sent by the OLT, the ONU enters a key confirm state from the key confirm waiting state.

If the ONU does not receive, when the key waiting timer 5 expires, the Key_Control(Confirm) PLOAM message sent by the OLT, the ONU performs step S507, that is, resends the Key_Report(Newkey) PLOAM message. If the ONU receives a new Key_Control(Generate) PLOAM message at this time, the ONU performs step S507 again, that is, resends the Key_Report(Newkey) PLOAM message to the OLT.

S510: The ONU changes a status of the new key, and sends an existing key report message to the OLT.

The ONU changes the status of the new key from an inactive state to an active state, and then sends a Key_Report(Existingkey) PLOAM message to the OLT. After the ONU sends the Key_Report(Existingkey) PLOAM message, the ONU enters a key active state from the key confirm state, that is, completes an activation procedure of the new key.

Correspondingly, after the OLT receives the Key_Report(Existingkey) PLOAM message, the OLT enters a key active state. A payload in a downstream physical frame subsequently sent to the ONU is encrypted by using the new key. In addition, if the OLT does not receive the Key_Report(Existingkey) PLOAM message when the key waiting timer 3 expires, the OLT sends a new key control (confirm) Key_Control(Confirm) PLOAM message to the ONU, to perform new key confirmation again.

In this embodiment, the timers (key waiting timers 1, 2, 3, 4, and 5) are set on the OLT and the ONU, to avoid waiting for a long time in the foregoing authentication procedure. This improves authentication efficiency. In addition, the OLT may flexibly set duration of the key waiting timer 1 to control total time of the foregoing key activation procedure. To be specific, before the OLT is in the key active state, if the key waiting timer 1 expires, the OLT enters the key inactive state, and restarts to perform the foregoing step S505. Correspondingly, the ONU may also flexibly set duration of the key waiting timer 4 to control the total time of the foregoing key activation procedure. To be specific, before the ONU is in the key active state, if the key waiting timer 4 expires, the ONU enters the key inactive state, waits to receive the key generate message sent by the OLT, and then restarts to perform the foregoing step S506.

In the authentication method provided in this embodiment, the new key may be used for communication between the ONU and the OLT. To be specific, the new key may be used for encryption or decryption in data sending and receiving procedures between the OLT and the ONU. This improves security of the communication between the ONU and the OLT.

In the authentication method provided in this embodiment, the ONU may first generate an intermediate key based on the random number R1 sent by the OLT and the shared key, and then generate the new key by using the intermediate key, the shared key, and the random number R2 generated by the ONU. The intermediate key is added, so that security of the generated new key (the sending key and the receiving key) can be improved.

In the authentication method provided in this embodiment, the existing key report message sent by the ONU may carry a key name generated by the ONU based on the new key, so that the OLT checks a local key based on the key name. For example, the OLT calculates a key name (Key_Name) based on the key stored in step S508. If the key name obtained by the OLT through calculation is consistent with the key name in the existing key report message, the key check succeeds. The OLT performs encrypted communication with the ONU based on the locally stored key. For example, Key_Name = AES_CMAC (shared key, new key |0x33313431353932363533353839373933, 128).

FIG. 6 is a block diagram of a configuration apparatus for an optical communication device according to an embodiment of this application. The configuration apparatus may be implemented as all or a part of an optical communication device (for example, an OLT or a main FTTR) by using software, hardware, or a combination thereof. As shown in FIG. 6, the configuration apparatus 600 includes a determining unit 601 and a sending unit 602.

The determining unit 601 is configured to determine a random delay parameter, where the random delay parameter is less than 48 µs. The sending unit 602 is configured to send a broadcast message to a plurality of second optical communication devices, where the broadcast message carries configuration information, and the configuration information is used to configure the random delay parameter.

Optionally, the determining unit 601 is configured to determine the random delay parameter in any one of the following manners:
receiving the input random delay parameter; or determining the random delay parameter based on a maximum differential distance between the first optical communication device and the plurality of second optical communication devices, where the random delay parameter is in direct proportion to the maximum differential distance; or determining the random delay parameter based on a remaining bandwidth, where the remaining bandwidth is a bandwidth that is not allocated to the second optical communication device in one bandwidth allocation periodicity, and the random delay parameter is less than a difference obtained by subtracting the round-trip propagation delay and a change of response time of the second optical communication device from a length of the remaining bandwidth.

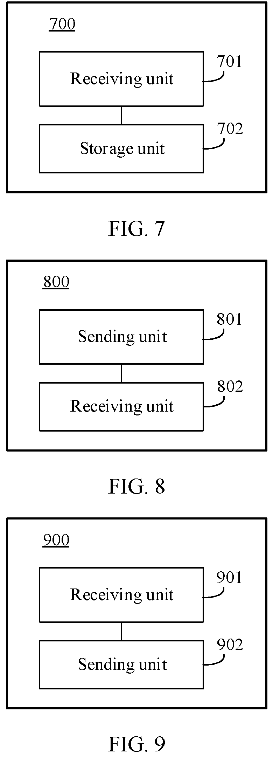

FIG. 7 is a block diagram of a configuration apparatus for an optical communication device according to an embodiment of this application. The configuration apparatus may be implemented as all or a part of an optical communication device (for example, an ONU or a sub FTTR) by using software, hardware, or a combination thereof. As shown in FIG. 7, the configuration apparatus 700 includes a receiving unit 701 and a storage unit 702.

The receiving unit 701 is configured to receive a broadcast message sent by a first optical communication device, where the broadcast message carries configuration information, the configuration information is used to configure a random delay parameter, and the random delay parameter is less than 48 µs. The storage unit 702 is configured to store the configuration information.

It should be noted that, when the configuration apparatus for an optical communication device provided in the foregoing embodiment configures the optical communication device, division of the foregoing functional units is merely used as an example for description. During actual application, the foregoing functions may be allocated to different functional units for implementation based on needs. That is, an internal structure of a device is divided into different functional units to implement all or some of the functions described above. In addition, the configuration apparatus for an optical communication device provided in the foregoing embodiment belongs to a same concept as embodiments of the configuration method for an optical communication device. For a specific implementation process, refer to the method embodiments, and details are not described herein again.

FIG. 8 is a block diagram of an authentication apparatus for an optical communication device according to an embodiment of this application. The configuration apparatus may be implemented as all or a part of an optical communication device (for example, an OLT or a main FTTR) by using software, hardware, or a combination thereof. As shown in FIG. 8, the authentication apparatus 800 includes a sending unit 801 and a receiving unit 802.

The sending unit 801 is configured to: send a broadcast message to a plurality of second optical communication devices, where the broadcast message carries configuration information, the configuration information is used to configure a random delay parameter, and the random delay parameter is less than 48 µs; and send a serial number request message to the plurality of second optical communication devices. The receiving unit 802 is configured to receive a serial number response message sent by the second optical communication device, where the serial number response message is sent by the second optical communication device based on the random delay parameter configured by using the configuration information.

FIG. 9 is a block diagram of an authentication apparatus 900 for an optical communication device according to an embodiment of this application. The configuration apparatus may be implemented as all or a part of an optical communication device (for example, an ONU or a sub FTTR) by using software, hardware, or a combination thereof. As shown in FIG. 9, the authentication apparatus 900 includes a receiving unit 901 and a sending unit 902.

The receiving unit 901 is configured to: receive a broadcast message sent by a first optical communication device, where the broadcast message carries configuration information, the configuration information is used to configure a random delay parameter, and the random delay parameter is less than 48 µs; and receive a serial number request message sent by the first optical communication device. The sending unit 902 is configured to send a serial number response message to the first optical communication device based on the random delay parameter in response to the serial number request message.

It should be noted that, when the authentication apparatus for an optical communication device provided in the foregoing embodiment performs authentication on the optical communication device, division of the foregoing functional units is merely used as an example for description. During actual application, the foregoing functions may be allocated to different functional units for implementation based on needs. That is, an internal structure of a device is divided into different functional units to implement all or some of the functions described above. In addition, the authentication apparatus for an optical communication device provided in the foregoing embodiment belongs to a same concept as embodiments of the authentication method for an optical communication device. For a specific implementation process, refer to the method embodiments, and details are not described herein again.

The foregoing descriptions of procedures corresponding to accompanying drawings have respective focuses. For a part of a procedure that is not described in detail, refer to related descriptions of another procedure.

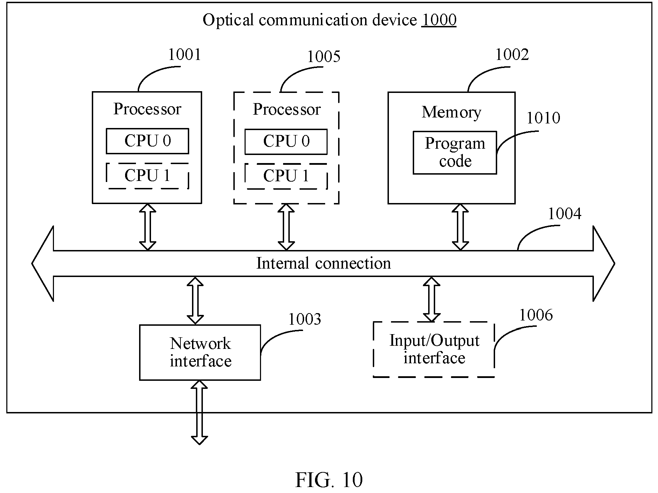

FIG. 10 is a diagram of a structure of an optical communication device 1000 according to an embodiment of this application. As shown in FIG. 10, the optical communication device 1000 includes at least one processor 1001, a memory 1002, and at least one network interface 1003.

The processor 1001 is, for example, a general-purpose central processing unit (central processing unit, CPU), a network processor (network processor, NP), a graphics processing unit (graphics processing unit, GPU), a neural-network processing unit (neural-network processing units, NPU), a data processing unit (data processing unit, DPU), a microprocessor, or one or more integrated circuits configured to implement the solutions of this application. For example, the processor 1001 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable logic gate array (field programmable gate array, FPGA), a generic array logic (generic array logic, GAL), or any combination thereof.

The memory 1002 is, for example, a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only Memory, EEPROM), a compact disc read-only memory (compact disc read-only memory, CD-ROM) or another optical disk storage, an optical disc storage (including a compact disc, a laser disc, an optical disc, a digital versatile disc, a Bluray disc, or the like), a disk storage medium or another magnetic storage device, or any other medium that can be used to carry or store expected program code in a form of instructions or a data structure and that can be accessed by a computer, but is not limited thereto. Optionally, the memory 1002 exists independently and is connected to the processor 1001 through an internal connection 1004. Alternatively, the memory 1002 is optionally integrated with the processor 1001.

The network interface 1003 is configured to communicate with another device or a communication network by using any transceiver-type apparatus. The network interface 1003 includes, for example, at least one of a wired network interface or a wireless network interface. The wired network interface is, for example, an Ethernet interface. The Ethernet interface is, for example, an optical interface, an electrical interface, or a combination thereof. The wireless network interface is, for example, a wireless local area network (wireless local area networks, WLAN) interface, a cellular network interface, or a combination thereof.

In some embodiments, the processor 1001 includes one or more CPUs, such as a CPU 0 and a CPU 1 shown in FIG. 10.

In some embodiments, the optical communication device 1000 optionally includes a plurality of processors, for example, the processor 1001 and a processor 1005 shown in FIG. 10. Each of these processors is, for example, a single-core processor (single-CPU) or a multi-core processor (multi-CPU). The processor herein is optionally one or more devices, circuits, and/or processing cores configured to process data (for example, computer program instructions).

In some embodiments, the optical communication device 1000 further includes the internal connection 1004. The processor 1001, the memory 1002, and the at least one network interface 1003 are connected through the internal connection 1004. The internal connection 1004 includes a path for transferring information between the foregoing components. Optionally, the internal connection 1004 is a board or a bus. Optionally, the internal connection 1004 is classified into an address bus, a data bus, a control bus, and the like.

In some embodiments, the optical communication device 1000 further includes an input/output interface 1006. The input/output interface 1006 is connected to the internal connection 1004.

In some embodiments, the input/output interface 1006 is configured to connect to an input device, and receive a command or data that is input by a user through the input device and that is related to the foregoing method embodiments, for example, a random delay parameter or a maximum differential distance. The input device includes but is not limited to a keyboard, a touchscreen, a microphone, a mouse, a sensing device, or the like.

In some embodiments, the input/output interface 1006 is further configured to connect to an output device. The input/output interface 1006 outputs, through the output device, an intermediate result and/or a final result, for example, a random delay parameter, generated when the processor 1001 performs the foregoing method embodiments. The output device includes but is not limited to a display, a printer, a projector, or the like.

Optionally, the processor 1001 implements the methods in the foregoing embodiments by reading program code 1010 stored in the memory 1002, or the processor 1001 implements the methods in the foregoing embodiments by using program code stored therein. When the processor 1001 implements the methods in the foregoing embodiments by reading the program code 1010 stored in the memory 1002, the memory 1002 stores the program code for implementing the methods in embodiments of this application.

For more details about the processor 1001 implementing the foregoing functions, refer to the descriptions in the foregoing method embodiments. Details are not described herein again.

In some embodiments, a computer-readable storage medium is further provided. The computer-readable storage medium stores computer instructions. When the computer instructions stored in the computer-readable storage medium are executed by an optical communication device, the optical communication device is caused to perform the configuration method for an optical communication device or the authentication method for an optical communication device provided in the foregoing method embodiments.

In some embodiments, a computer program product is further provided. The computer program product includes one or more computer program instructions. When the computer program instructions are loaded and run by a computer, the computer is caused to perform the configuration method for an optical communication device or the authentication method for an optical communication device provided in the foregoing method embodiments.

In some embodiments, a chip is further provided, including a memory and a processor. The memory is configured to store computer instructions, and the processor is configured to invoke the computer instructions from the memory and run the computer instructions, to perform the configuration method for an optical communication device or the authentication method for an optical communication device provided in the foregoing method embodiments.

Unless otherwise defined, a technical term or a scientific term used herein should have a general meaning understood by a person of ordinary skill in the art of this application. In the specification and claims of this application, terms such as "first", "second", and "third" do not indicate any order, quantity, or importance, but are merely used to distinguish different components. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded.

The foregoing is merely an embodiment of this application, but is not intended to limit this application. The protection scope of this application is subject to the protection scope of the claims.

## Claims

1. An authentication method for an optical communication device, wherein the method comprises:
sending, by a first optical communication device, a serial number request message to a plurality of second optical communication devices;
receiving, by the first optical communication device, a serial number response message sent by the second optical communication device, wherein the serial number response message carries a random delay parameter and a serial number of the second optical communication device;
performing, by the first optical communication device, authentication on the second optical communication device based on the serial number and the random delay parameter; and
sending, by the first optical communication device after the authentication succeeds, a key generate message to the second optical communication device, wherein the key generate message carries a key parameter, and the key parameter is used to generate a new key.

2. The method according to claim 1, further comprising:
receiving, by the first optical communication device, a new key report message sent by the second optical communication device, wherein the new key report message carries the new key generated by the second optical communication device.

3. The method according to claim 1, wherein the first optical communication device starts a first key waiting timer when sending the key generate message to the second optical communication device; and
the first optical communication device sends a new key generate message to the second optical communication device when the first key waiting timer expires and no new key report message sent by the second optical communication device is received.

4. The method according to claim 1, further comprising:
entering, by the first optical communication device, a key confirm state from a key request state when receiving a new key report message.

5. The method according to claim 1, further comprising:
sending, by the first optical communication device, a key confirm message to the second optical communication device, wherein the key confirm message carries an index of the new key.

6. The method according to claim 5, further comprising:
receiving, by the first optical communication device, an existing key report message sent by the second optical communication device, and entering, by the first optical communication device, a key active state.

7. The method according to claim 5, wherein the first optical communication device starts a second key waiting timer when sending the key confirm message to the second optical communication device; and
the first optical communication device sends a new key confirm message to the second optical communication device when the second key waiting timer expires and no existing key report message sent by the second optical communication device is received.

8. The method according to claim 1, wherein sending, by the first optical communication device, the serial number request message to the plurality of second optical communication devices comprises: sending, in a quiet window, the serial number request message to the plurality of second optical communication devices, wherein a length of the quiet window is less than or equal to 250 µs.

9. The method according to claim 1, wherein before sending, by the first optical communication device, the serial number request message to the plurality of second optical communication devices, the method further comprises:
sending, by the first optical communication device, a broadcast message to the plurality of second optical communication devices, wherein the broadcast message carries configuration information.

10. The method according to claim 9, wherein the broadcast message is a physical layer operations, administration and maintenance PLOAM message, and the PLOAM message comprises a field used to carry the configuration information; or
the broadcast message is a gigabit-capable passive optical network transmission convergence GTC frame or an Ethernet packet.

11. The method according to claim 10, wherein the PLOAM message is an extended burst length message, an upstream_overhead message, or an extended optical network unit ONU configuration message.

12. An authentication method for an optical communication device, wherein the method comprises:
receiving, by a second optical communication device, a serial number request message sent by a first optical communication device;
generating, by the second optical communication device, a random delay parameter in response to the serial number request message;
sending, by the second optical communication device, a serial number response message to the first optical communication device based on the random delay parameter, wherein the serial number response message carries the random delay parameter and a serial number of the second optical communication device;
receiving, by the second optical communication device, a key generate message sent by the first optical communication device, wherein the key generate message carries a key parameter, and the key parameter is used to generate a new key; and
generating, by the second optical communication device, the new key based on the key parameter in the key generate message.

13. The method according to claim 12, further comprising:
sending, by the second optical communication device, a new key report message to the first optical communication device, wherein the new key report message carries the new key generated by the second optical communication device.

14. The method according to claim 13, wherein the second optical communication device starts a third key waiting timer when sending the new key report message to the first optical communication device; and
the second optical communication device resends the new key report message to the first optical communication device when the third key waiting timer expires and no key confirm message sent by the first optical communication device is received.

15. The method according to claim 12, further comprising:
receiving, by the second optical communication device, a key confirm message sent by the first optical communication device, and entering a key confirm state.

16. The method according to claim 15, further comprising:
sending, by the second optical communication device, an existing key report message to the first optical communication device, and entering, by the second optical communication device, a key active state.

17. The method according to claim 12, wherein generating, by the second optical communication device, the new key based on the key parameter in the key generate message comprises:
generating, by the second optical communication device, the new key based on a random number in the key generate message.

18. The method according to claim 13, wherein the new key carried in the new key report message is encrypted by using a shared key between the second optical communication device and the first optical communication device.

19. An optical communication device, wherein the optical communication device comprises a processor and a memory, the memory is configured to store a software program, and the processor runs or executes the software program stored in the memory, to cause the optical communication device to implement the method according to any one of claims 1 to 11 or the method according to any one of claims 12 to 18.

20. A computer-readable storage medium, wherein the computer-readable storage medium is configured to store program code executed by a processor, and the program code comprises instructions used to implement the method according to any one of claims 1 to 11 or the method according to any one of claims 12 to 18.
